(19) Europäisches Patentamt / European Patent Office / Office européen des brevets

(11) **EP 3 648 209 A1**

(12) **EUROPEAN PATENT APPLICATION**
published in accordance with Art. 153(4) EPC

(43) Date of publication:
06.05.2020 Bulletin 2020/19

(51) Int Cl.:
*H01M 4/14* (2006.01)   *H01M 4/76* (2006.01)
*H01M 10/06* (2006.01)

(21) Application number: 18824905.6

(22) Date of filing: 27.06.2018

(86) International application number:
PCT/JP2018/024429

(87) International publication number:
WO 2019/004301 (03.01.2019 Gazette 2019/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.06.2017  JP 2017127690
27.12.2017  PCT/JP2017/047060

(71) Applicant: Hitachi Chemical Company, Ltd.
Chiyoda-ku
Tokyo 100-6606 (JP)

(72) Inventors:
• SUZUKI Keita
  Tokyo 100-6606 (JP)
• KIKUCHI Kenta
  Tokyo 100-6606 (JP)
• NUKUMIZU Kohta
  Tokyo 100-6606 (JP)
• SHIBAHARA Toshio
  Tokyo 100-6606 (JP)
• NAKANISHI Ryoichi
  Tokyo 100-6606 (JP)

(74) Representative: Hoffmann Eitle
Patent- und Rechtsanwälte PartmbB
Arabellastraße 30
81925 München (DE)

(54) **ACTIVE MATERIAL HOLDING TUBE, ELECTRODE, AND LEAD STORAGE BATTERY**

(57) In one aspect, the present invention provides an active material holding tube comprising a resin base member including a polyolefin and a resin held on the resin base member.

Fig.1

EP 3 648 209 A1

## Description

### Technical Field

The present invention relates to an active material holding tube, an electrode, and a lead storage battery.

### Background Art

Lead storage batteries are widely used as secondary batteries for industrial or consumer. A lead storage battery is composed of, for example, a cylindrical tube, a cored bar (current collector) inserted into the tube, and an electrode material filled between the tube and the cored bar. For example, Patent Literature 1 discloses a woven fabric tube composed mainly of glass fiber or synthetic fiber as a cylindrical tube.

### Citation List

### Patent Literature

[Patent Literature 1] Japanese Unexamined Patent Publication No. H8-203506

## Summary of Invention

### Technical Problem

Lead storage batteries are required to be excellent in charge characteristics and discharge characteristics. However, it is not always easy to achieve both charge characteristics and discharge characteristics.
The present invention aims to provide a lead storage battery excellent in both charge characteristics and discharge characteristics, and an active material holding tube and an electrode capable of obtaining the lead storage battery.

### Solution to Problem

The present inventors investigated the configuration of an active material holding tube to improve charge characteristics and discharge characteristics (collectively these are also referred to as "charge and discharge characteristics") of a lead storage battery, and have found that using a tube in which a resin is held on a specific base member can achieve both charge characteristics and discharge characteristics.
That is, in one aspect, the present invention is an active material holding tube comprising a resin base member comprising a polyolefin and a resin held on the resin base member. Such an active material holding tube is, for example, excellent in charge and discharge characteristics, as compared with the conventionally well-known tube consisting of glass or synthetic resin.
The resin base member may further comprise a polyester. The resin held on the resin base member is preferably an acrylic resin.
The content of the resin held on the resin base member may be 10 to 50 % by mass based on the total amount of the active material holding tube.
The resin base member may have a hydrophilized surface. This can improve the tensile strength of the active material holding tube and suppress deterioration due to an electrolytic solution.
In another aspect, the present invention is an electrode comprising the above active material holding tube and a cored bar and an electrode material disposed in the active material holding tube.
In still another aspect, the present invention is a lead storage battery comprising a positive electrode plate comprising the above active material holding tube.
In still another aspect, the present invention is a manufacturing method of an active material holding tube, the method comprising holding a resin on a resin base member comprising a polyolefin.
This manufacturing method may further comprise performing a hydrophilization the resin base member before the resin is held. The hydrophilization may be at least one selected from the group consisting of sulfuric acid treatment, fluorine gas treatment, plasma treatment, and surfactant treatment.

### Advantageous Effects of Invention

The present invention can provide a lead storage battery with excellent charge characteristics and discharge characteristics, and an active material holding tube and an electrode capable of obtaining the lead storage battery.

**Brief Description of Drawings**

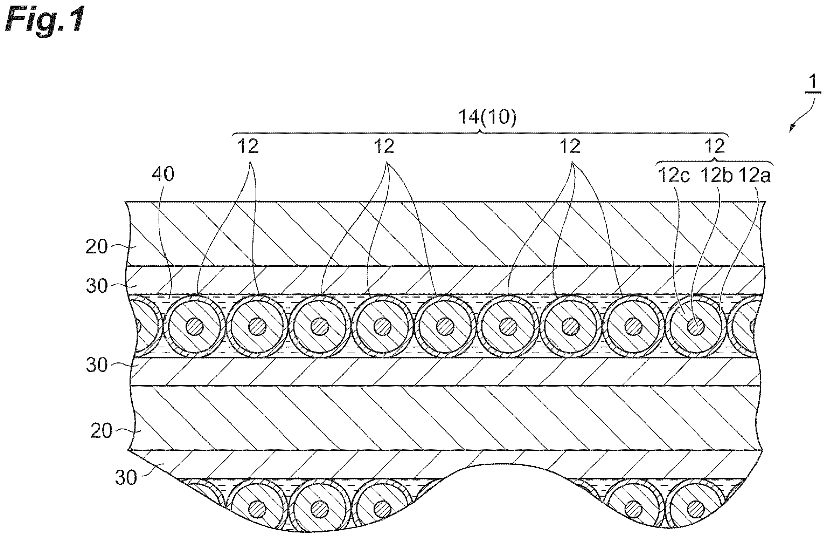

FIG. 1 is a schematic cross-sectional view showing the lead storage battery according to an embodiment.

**Description of Embodiments**

Hereinafter, embodiments of the present invention are described in detail with reference to the drawings as appropriate.

<Lead storage battery>

FIG. 1 is a schematic cross-sectional view showing the lead storage battery according to one embodiment. As shown in FIG. 1, a lead storage battery 1 is a lead storage battery including a positive electrode 10, a negative electrode 20, and a separator 30. The positive electrode 10, the negative electrode 20, and the separator 30 are accommodated in a battery container (not shown). The positive electrode 10 and the negative electrode 20 are alternately disposed through the separator 30. The battery container is filled with an electrolytic solution 40.

The positive electrode 10 is plate-shaped, and for example, is a positive electrode plate composed of a cylindrical electrode group 14 composed of a plurality of cylindrical electrodes (bar-shaped electrodes) 12 disposed side by side. The number of the cylindrical electrode 12 is, for example, 2 to 19, or 14 to 19. Each of the cylindrical electrodes 12 has: an active material holding tube (also referred to as "clad tube" or "gauntlet," hereinafter, it is simply referred to as a tube) 12a; a cored bar (current collector) 12b inserted into the tube 12a; and a positive electrode material (electrode material) 12c filled between the tube 12a and the cored bar 12b.

At both ends of the tube 12a, a joint (not shown) for holding the tube 12a and the cored bar 12b is attached. The upper joint is attached to one end of the tube 12a (opening for inserting the cored bar 12b and filling the raw material (for example, lead powder) of the positive electrode material). The lower joint is attached to the other end of the tube 12a (bottom of the tube 12a). Both the upper joint and lower joint are not necessarily provided, and at least the lower joint may be provided.

The tube 12a is cylindrical, and the cross-sectional shape perpendicular to the axial direction of the tube 12a may be a circle, an ellipse, a rounded rectangle, or the like. The length of the tube 12a is, for example, 160 to 700 mm. The diameter (outer diameter) of the tube 12a is, for example, 5 to 12 mm, or 9 to 12 mm.

The tube 12a comprises a base member formed from a resin including a polyolefm (resin base member including a polyolefin) and a resin held on the base member.

The base member is formed from a porous body and has pores. The base member may be formed from, for example, a woven fabric or a non-woven fabric.

The polyolefin includes, for example, at least one olefin (alkene) having 2 to 3 carbon atoms as a monomer unit. The polyolefin preferably includes at least one selected from the group consisting of ethylene and propylene as a monomer unit. The polyolefin is preferably polyethylene, polypropylene, or a mixture thereof. The weight average molecular weight of the polyolefin may be, for example, 10000 to 10000000.

The content of the polyolefin may be 50% by mass or more, 60% by mass or more, or 70% by mass or more, and may be 100% by mass or less, 90% by mass or less, 80% by mass or less, or 70% by mass or less, based on the total amount of the resin forming the base member.

The resin forming the base member may further include a polyester. That is, the base member may be a resin base member including a polyolefin and a polyester. When the base member is a woven or non-woven fabric, the base member may be a woven or non-woven fabric including polyolefin fibers and polyester fibers. The polyester may be a polyalkylene terephthalate such as polyethylene terephthalate.

The content of polyester may be 20% by mass or more, 30% by mass or more, or 40% by mass or more, and may be 50% by mass or less, 40% by mass or less, or 30% by mass or less, based on the total amount of the resin forming the base member.

The base member may be formed from the resin including a polyolefin containing at least one selected from the group consisting of polyethylene and polypropylene. The base member may be formed from the resin including at least one selected from the group consisting of polypropylene and polyethylene terephthalate. The base member is preferably formed from the resin including polyolefins containing polyethylene and polypropylene, or the resin including polyethylene, polypropylene, and polyethylene terephthalate, from the viewpoint of further improving durability and charge and discharge characteristics. From the same viewpoint, the base member may consist of polyolefins containing polyethylene and polypropylene, and may consist of polyethylene, polypropylene, and polyethylene terephthalate.

The average pore diameter of the base member is preferably 50 $\mu$m or less, more preferably 25 $\mu$m or less,

and still more preferably 10 $\mu$m or less, from the viewpoint of suppressing the outflow of the positive electrode material and improving the cycle characteristics. The average pore diameter of the base member is preferably 1 $\mu$m or more, more preferably 5 $\mu$m or more, and still more preferably 10 $\mu$m or more, from the viewpoint of reducing electrical resistance and further improving discharge capacity. The average pore diameter is measured by a pore distribution measuring apparatus (for example, AUTO PORE IV 9520 manufactured by Shimadzu Corporation).

The basis weight of the base member is preferably 200 $g/m^2$ or less, more preferably 150 $g/m^2$ or less, and still more preferably 130 $g/m^2$ or less, from the viewpoint of reducing resistance due to the electrolytic solution. The basis weight of the base member is preferably 100 $g/m^2$ or more, more preferably 115 $g/m^2$ or more, and still more preferably 130 $g/m^2$ or more, from the viewpoint of excellent cycle characteristics. The basis weight means the mass per unit area measured according to JIS L1913.

The surface of the base member may be hydrophilized by performing the hydrophilization. The hydrophilization may be, for example, at least one selected from the group consisting of sulfuric acid treatment, fluorination treatment, plasma treatment, and surfactant treatment. Hydrophilization of the surface of the base member increases the amount of resin held on the base member, as described below, and can improve the tensile strength of the tube 12a. This can also suppress such an event that the tube 12a deteriorates by contact with the electrolyte solution and its tensile strength becomes small. Details of the hydrophilic treatment method will be described below.

The resin held on the base member may be an acrylic resin, an epoxy resin, a rosin resin, a terpene resin, a petroleum resin, a melamine resin, a phenol resin, and the like, and may be at least one selected from the group consisting of these resins. The resin is preferably an acrylic resin from the viewpoint of further improving charge and discharge characteristics.

The acrylic resin includes at least one monomer having a (meth) acryloyl group as a monomer unit. The acrylic resin may be a homopolymer including only one of the monomers as a monomer unit, and may be a copolymer including two or more of the monomers as a monomer unit. The content of the monomer unit having a (meth) acryloyl group in the acrylic resin may be, for example, 50% by mass or more, 70% by mass or more, or 90% by mass or more, based on all monomer units, and the acrylic resin may consist only of monomer units having a (meth) acryloyl group.

The epoxy resin may be, for example, a bisphenol A epoxy resin, a bisphenol F epoxy resin, a bisphenol S epoxy resin, a phenol novolac epoxy resin, a cresol novolac epoxy resin, a bisphenol A novolac epoxy resin, a bisphenol F novolac epoxy resin, a stilbene epoxy resin, a triazine skeleton-containing epoxy resin, a fluorene skeleton-containing epoxy resin, a biphenyl epoxy resin, a xylylene epoxy resin, a biphenyl aralkyl epoxy resin, a naphthalene epoxy resin, a dicyclopentadiene epoxy resin, an alicyclic epoxy resin, and a phosphorus-containing epoxy resin introducing diglycidyl ether compounds of polycyclic aromatics, such as polyfunctional phenols and anthracene, and these phosphorus compounds.

The rosin resin may be a rosin resin, a rosin ester resin, a hydrogenated rosin ester resin, or the like. The terpene resin may be a terpene resin, a hydrogenated terpene resin, or the like. The petroleum resin may be, for example, an aliphatic petroleum resin, an aromatic petroleum resin, or a hydrogenated product thereof.

The melamine resin may be a resin of high alkyl type, methylol type, imino type, semi-cured type, or methylol/imino type.

The phenolic resin may be a resin obtained under an acidic catalyst by condensation or co-condensation of a phenol such as phenol, cresol, xylenol, resorcinol, catechol, bisphenol A, or bisphenol F or a naphthol such as $\alpha$-naphthol, $\beta$-naphthol, or dihydroxynaphthalene and an aldehyde such as formaldehyde, acetaldehyde, propionaldehyde, benzaldehyde, or salicylaldehyde; a biphenyl skeleton phenol resin; a paraxylylene modified phenol resin; a metaxylylene/paraxylylene modified phenolic resin; a melamine modified phenolic resin; a terpene modified phenolic resin; a dicyclopentadiene modified phenolic resin; a cyclopentadiene modified phenolic resin; a polycyclic aromatic ring-modified phenolic resin; a xylylene-modified naphthol resin; or the like.

The resin may be held on the inner surface or outer surface of the base member or on the surface inside the pores of the base member (collectively these are also simply referred to as "on the base member"), and may be adhered on the base member in one embodiment. The resin may be held on a part of the base member or may be held on the whole of the base member.

The content of the resin held on the base member is preferably 10% by mass or more, more preferably 20% by mass or more, and still more preferably 30% by mass or more, and for example, may be 50% by mass or less, based on the total amount of tube 12a, from the viewpoint of ensuring the strength of the tube 12a in manufacturing the electrode and withstanding the expansion of the active material in using the lead storage battery 1. From the same viewpoint, the content of the resin held on the base member is preferably 10 to 50% by mass, more preferably 20 to 50% by mass, and still more preferably 30 to 50% by mass, based on the total amount of the tube 12a.

The content of the resin held on the base member is measured in the following procedures.

An aluminum pan for thermogravimetric/differential heat measuring apparatus (TG-DTA) is used as a container, and about 5.0mg of a sample obtained by grinding a base member (active material holding tube) on which the resin is held is weighed to record the weight $W_1$ (mg). For the above sample, measurement is performed by using TG-DTA measuring apparatus (for example, TG8120 manufactured by Rigaku Corporation). In measurement, an inert gas (helium) is flowed at a flow rate of 100 ml/min. The temperature is raised from room temperature (for example, 25°C) to 100°C at a temperature rising rate of 10°C/min, and is kept at 100°C for 10 minutes to remove moisture in the sample. Thereafter, the temperature is further increased to 380°C at a temperature rising rate of 10°C/min and is kept at 380°C for 20 minutes. The temperature is further increased to 500°C at a temperature rising rate of 10°C/min and is kept at 500°C for 5 minutes. The weight reduction amount $W_2$ (mg) of the sample in the above temperature rising process is calculated. On the other hand, as a reference sample, only the base member on which no resin is held is also subjected similarly to temperature rising, and the weight reduction amount $W_3$ (mg) of the reference sample in this temperature rising process is calculated. The resin content is calculated as the ratio of the difference between the weight reduction amount $W_2$ of the sample and the weight reduction amount $W_3$ of the reference sample to the weight $W_1$ of the sample (= $(W_2 - W_3)/W_1 \times 100$ (%)).

The cored bar 12b is disposed along the longitudinal direction of the tube 12a at the center of the tube 12a. The cored bar 12b can be obtained by casting, for example, a pressure casting method. The constituent material of the cored bar 12b may be a conductive material, and examples thereof include lead alloys such as lead-calcium-tin alloys and lead-antimony-arsenic alloys. The lead alloy may include selenium, silver, bismuth, and the like. The cross-sectional shape perpendicular to the longitudinal direction of the cored bar 12b may be circular, elliptical, or the like. The length of the cored bar 12b is, for example, 170 to 400 mm. The diameter of the cored bar 12b is, for example, 2.0 to 4.0 mm.

The content of antimony in the cored bar 12b is preferably 2.0% by mass or more, more preferably 3.0% by mass or more, and still more preferably 4.0% by mass or more from the viewpoint of excellent strength and hardness of the cored bar 12b. The content of antimony is preferably 8.0% by mass or less, more preferably 5.0% by mass or less, and still more preferably 4.0% by mass or less from the viewpoint of excellent corrosion resistance and easy suppression of self-discharge. The content of antimony can be measured, for example, by high frequency inductively coupled plasma emission analysis (ICP emission analysis).

The positive electrode material 12c contains a positive electrode active material after formation, and can further contain an additive as required. The formed positive electrode material can be obtained, for example, by forming an unformed positive electrode material including a raw material for the positive electrode active material. The formed positive electrode material may be obtained by, for example, aging and drying a positive electrode material paste including the raw material of the positive electrode active material to obtain an unformed positive electrode material and then forming the unformed positive electrode material. Examples of the raw material for the positive electrode active material include lead powder and red lead. Examples of the positive electrode active material in the formed positive electrode material include lead dioxide.

Examples of the additive for the positive electrode material include reinforcing short fibers. Examples of reinforcing short fibers include acrylic fibers, polyethylene fibers, polypropylene fibers, and polyethylene terephthalate fibers (PET fibers).

The negative electrode 20 has a plate shape and is, for example, a paste negative electrode plate. The negative electrode 20 has a negative electrode current collector and a negative electrode material (electrode material) held in the negative electrode current collector. A plate current collector can be used as the negative electrode current collector. The composition of the negative electrode current collector and the cored bar of the positive electrode may be the same or different from each other.

The formed negative electrode material contains a negative electrode active material, and can further contain an additive as required. The formed negative electrode material can be obtained by, for example, aging and drying a negative electrode material paste including a raw material for a negative electrode active material to obtain an unformed negative electrode material and then by forming the unformed negative electrode material. Examples of the raw material for the negative electrode active material include lead powder and lead oxide powder. Examples of the negative electrode active material in the formed negative electrode material include porous spongy lead.

Examples of the additive for the negative electrode material include: barium sulfate; reinforcing short fibers; a carbon material (carbonaceous conductive material); and a resin having at least one selected from the group consisting of a sulfone group and a sulfonate group (resin having a sulfone group and/or a sulfonate group). As the reinforcing short fiber, the same reinforcing short fiber as that of the positive electrode material can be used.

Examples of the carbon material include carbon black and graphite. Examples of carbon black include furnace black (such as Ketjen Black (registered trademark)), channel black, acetylene black, and thermal black.

Examples of the resin having a sulfone group and/or a sulfonate group include lignin sulfonic acid, lignin sulfonate, and condensates of phenols, aminoaryl sulfonic acid, and formaldehyde. Examples of lignin sulfonate include alkali metal salts of lignin sulfonic acid. Examples of the phenols include bisphenol compounds such as bisphenol. Examples of the aminoarylsulfonic acid include aminobenzenesulfonic acid and aminonaphthalenesulfonic acid.

One side of the separator 30 is in contact with the positive electrode 10, and the other side of the separator 30 is in contact with the negative electrode 20. Each of the positive electrode 10 and the negative electrode 20 is sandwiched between separators 30. Each of the positive electrode 10 and the negative electrode 20 may be sandwiched between two separators, or may be sandwiched between one folded separator. The space around the positive electrode 10 between the separators 30 and 30 is filled with the electrolytic solution 40.

The separator material is not particularly limited as long as it prevents electrical connection between the positive electrode and the negative electrode and allows the electrolyte solution to pass therethrough. Examples of the material for the separator include microporous polyethylene and a mixture of glass fiber and synthetic resin.

The electrolytic solution can contain sulfuric acid. As the electrolytic solution, dilute sulfuric acid can be used. The electrolytic solution may contain aluminum ions, sodium ions, and the like. The specific gravity of the electrolytic solution after the formation may be 1.25 or more, 1.26 or more, or 1.27 or more, and may be 1.33 or less, 1.32 or less, or 1.31 or less.

<Method of manufacturing lead storage battery>

The lead storage battery according to the present embodiment is manufactured by, for example, a manufacturing method comprising an electrode producing step for obtaining electrodes (positive electrode and negative electrode) and an assembling step for assembling components including electrodes to obtain a lead storage battery.

The electrode producing step has a positive electrode producing step and a negative electrode producing step. The positive electrode producing step has, for example, a step of producing the active material holding tube and a finishing step.

In the step of manufacturing the active material holding tube, for example, a woven or non-woven sheet formed from a resin including a polyolefin is formed into a cylindrical shape (for example, a circular cylinder shape). At this time, as required, a sheet laminate in which a plurality of woven or non-woven sheets are placed on one another and sewn together may be used.

In the step of producing the active material holding tube, a resin is held on a base member (woven or non-woven sheet formed into a cylindrical shape). The method of holding the resin on the base member may be, for example, a method of impregnating a woven or non-woven sheet with an emulsion in which the resin is dispersed in water and then drying, for example, at 60 to 130°C for 1 to 3 hours.

The average particle diameter of the resin in the emulsion may be, for example, 50 to 150 nm. The average particle diameter of the resin is measured by a particle diameter distribution measuring apparatus (for example, LS1320 manufactured by Beckman Coulter, Inc.). Specifically, the resin is dispersed in pure water, poured into the apparatus main body, and measured under the following measurement conditions.

Dispersion solvent: $H_2O$-D
Refractive index of dispersion solvent: 1.33
Refractive index of sample: 1.5
Optical model: 1.5, rt780dPIDS
Execution time: 60 seconds
Pump speed: 50%
Sample density: 1 g/mL

In another embodiment, the producing step of the active material holding tube may further comprise a step of hydrophilizing the base member. In the step of hydrophilizing the base member, for example, the base member is hydrophilized before holding the resin on the base member (woven or non-woven sheet formed into a cylindrical shape). The hydrophilization is preferably at least one selected from the group consisting of sulfuric acid treatment, fluorine gas treatment, plasma treatment, and surfactant treatment.

The sulfuric acid treatment may be a treatment in which the base member is in contact with sulfuric acid. This allows a sulfone group to be introduced into the surface of the base member. The sulfuric acid may be anhydrous sulfuric acid, fuming sulfuric acid, hot concentrated sulfuric acid, and the like.

The fluorine gas treatment may be a treatment in which the base member is in contact with fluorine gas or a mixed gas including fluorine gas. Examples of the mixed gas include a mixed gas of fluorine gas and inert gas or oxygen gas. Examples of the inert gas include nitrogen gas and argon gas.

Plasma treatment may be a treatment for roughening the surface of the base member with high energy of plasma under an inert atmosphere such as argon, helium, or nitrogen, or under an oxidizing atmosphere such as oxygen.

The surfactant treatment may be a treatment in which the base member is in contact with the surfactant. Specifically, a method of impregnating a base member in a surfactant solution or a method of applying or spraying a surfactant solution brings the surfactant into contact with the base member, and then drying is performed to modify the surface of the base member. As the surfactant, an anionic surfactant, a cationic surfactant, an amphoteric surfactant, a nonionic surfactant, or the like can be used.

In the step of producing the active material holding tube, a resin was held by the same method as described above on a woven or non-woven sheet (sheet laminate) formed from a polyolefin-containing resin, and then the sheet on which the resin was held (sheet laminate) may be formed into a cylinder shape (for example, circular cylinder shape). Even in this case, the base member may be subjected to the hydrophilic treatment before the resin is held on the base member.

In the finishing step, a positive electrode having an unformed positive electrode material is obtained, for example, by filling the raw material of the positive electrode and the cored bar into the tube and then by plugging the lower joint at the lower end of the tube. In the finishing step, a positive electrode having an unformed positive electrode material may be obtained, for example, by filling the tube with a slurry including water and a solvent, such as dilute sulfuric acid, and the raw material of the positive electrode and with a cored bar, and then by plugging the lower joint at the lower end of the tube.

In the step of producing the negative electrode, a negative electrode having an unformed negative electrode material is obtained, for example, by filling a negative electrode current collector (for example, a current collector grid (such as casting grid and expanded grid)) with a negative electrode material paste including a raw material for the negative electrode active material and then by performing aging and drying. The aging is performed, for example, in an atmosphere at a temperature of 35 to 85°C and a humidity of 50 to 98 RH% for 15 to 60 hours. Drying is performed, for example, at a temperature of 45 to 80°C for 15 to 30 hours.

The negative electrode material paste may further include, for example, the above additives in addition to the raw material of the negative electrode active material. The negative electrode material paste may further include a solvent and sulfuric acid. Examples of the solvent include water and organic solvents.

In the negative electrode material paste, when using additives such as barium sulfate, carbon materials, reinforcing short fibers, resins having sulfone groups and/or sulfonate groups, the blending amount of barium sulfate is, for example, 0.01 to 2 parts by mass with respect to 100 parts by mass of the raw material of the negative electrode active material. The blending amount of the carbon material is, for example, 0.1 to 3 parts by mass with respect to 100 parts by mass of the raw material of the negative electrode active material. The blending amount of the reinforcing short fiber is, for example, 0.01 to 0.3 parts by mass with respect to 100 parts by mass of the negative electrode active material. The blending amount of the resin having a sulfone group and/or a sulfonate group is, for example, 0.01 to 2 parts by mass in terms of resin solid content, with respect to 100 parts by mass of the raw material of the negative electrode active material.

In the assembling step, for example, unformed positive electrodes and unformed negative electrodes are stacked through separators, and current collecting parts of the same polarity electrodes are welded with a strap to obtain an electrode group. Such electrode groups are disposed in a battery container to produce an unformed battery. Dilute sulfuric acid is put into the unformed battery and a direct current is applied to perform container formation. The lead storage battery is obtained by adjusting the specific gravity of the sulfuric acid after the formation to an appropriate specific gravity. The specific gravity (before the formation) of sulfuric acid is, for example, 1.100 to 1.260.

Formation conditions and specific gravity of sulfuric acid can be adjusted according to the size of the electrode. The formation treatment is not limited to being performed after the assembling step, and may be performed in the electrode manufacturing step (tank formation).

## Examples

Hereinafter, the present invention is described more specifically based on Examples, but the present invention is not limited to the following Examples.

(Example 1)

<Production of active material holding tube>

An emulsion (average particle diameter of 78 nm) of an acrylic resin (AJ-1800 manufactured by DIC Corporation, hereinafter also referred to as acrylic resin A) was impregnated into a sheet laminate for 1 minute with a non-woven fabric sheet made of polyolefins (polyethylene and polypropylene included, average pore diameter of 10 $\mu$m, and basis weight of 63 g/m$^2$). It was dried in a constant temperature oven at 100°C for 1 hour to obtain a non-woven fabric in which the acrylic resin A was held on the polyolefin base member. This non-woven fabric was cut into 15 mm $\times$ 100 mm, and the long side portion was sewn in a state where four sheets of the non-woven fabric were placed on one another to obtain a sheet laminate. In a state where the sheet laminate was in a cylindrical shape through a 9 mm$\phi$ mandrel between the second and third non-woven fabric sheets, thermoformation at 150°C for 10 minutes provided an active material holding tube (cylindrical shape having an inner diameter of 9 mm$\phi$ $\times$ 100 mm) in which the acrylic resin was held on the polyolefin base member. The thickness of the tube (base member (non-woven fabric) on which the acrylic resin A was held) was 0.4 mm as measured with a caliper.

An aluminum pan for thermogravimetric/differential heat measuring apparatus (TG-DTA) was used as a container, and about 5.0mg of the sample obtained by grinding the obtained tube was weighed, and the weight $W_1$ (mg) was recorded. For the above sample, measurement was performed by using the TG-DTA measuring apparatus (TG8120 manufactured by Rigaku Corporation). In measurement, an inert gas (helium) was flowed at a flow rate of 100 ml/min. The temperature was raised from room temperature (for example, 25°C) to 100°C at a temperature rising rate of 10°C/min, and was kept at 100°C for 10 minutes to remove moisture in the sample. Thereafter, the temperature was further increased to 380°C at a temperature rising rate of 10°C/min and was kept at 380°C for 20 minutes. The temperature was further increased to 500°C at a temperature rising rate of 10°C/min and was kept at 500°C for 5 minutes. The weight reduction amount $W_2$ (mg) of the sample in the above temperature rising process was calculated. On the other hand, as a reference sample, only the base member on which no acrylic resin A was held was also subjected similarly to temperature rising, and the weight reduction amount $W_3$ (mg) of the reference sample in this temperature rising process was calculated. The resin content was calculated as the ratio of the difference between the weight reduction amount $W_2$ of the sample and the weight reduction amount $W_3$ of the reference sample to the weight $W_1$ of the sample (= ($W_2$ - $W_3$)/$W_1$ $\times$ 100 (%)) to obtain 30% by mass based on the total amount of the tube.

<Production of electrode plate>

In the obtained tube, 19 g of lead powder consisting of lead monoxide and red lead and a cored bar of lead-antimony (4.0 wt%)-arsenic (0.2 wt%)-tin (0.015 wt%) alloy (2.7 mm$\phi$ $\times$ 150 mm cylindrical shape) were placed, and three tubes sealed at the upper and lower ends of the tube were arranged to obtain an unformed positive electrode plate.

On the other hand, lead-antimony alloy (antimony content of 3% by mass) was melted, and a lattice body (dimensions: length of 116.0 mm, width of 58.0 mm, and thickness of 2.4 mm) was produced by a casting method. With respect to 100 parts by mass of lead powder mainly composed of lead monoxide, 0.3 parts by mass of barium sulfate, 0.03 parts by mass of reinforcing short fibers, 0.2 parts by mass of lignin sulfonate, 8 parts by mass of water, and 10 parts by mass of dilute sulfuric acid (specific gravity of 1.260) were added, and then these were kneaded to prepare a negative electrode material paste. The negative electrode material paste was filled into the above lattice body, and then aging and drying were performed under the following conditions to obtain an unformed negative electrode plate.

(Aging conditions) Temperature: 40°C, Humidity: 98RH%, Time: 40 hours

(Drying conditions) Temperature: 60°C, Time: 24 hours

Two unformed negative electrode plates were used and opposed to each other so as to sandwich the positive electrode plate through a polyethylene separator to prepare a positive electrode single plate cell.

<Production of lead storage battery>

The above positive electrode single plate cells were alternately stacked through polyethylene separators to produce an electrode plate group, and then a positive electrode terminal and a negative electrode terminal were welded to the respective electrode plate groups. The electrode plate groups were accommodated in the battery container and then a container cover was attached. Dilute sulfuric acid (specific gravity of 1.260) was injected from a liquid mouth part, and then container formation was performed to produce a lead storage battery. The conditions for container formation were as follows: in a water tank, a water temperature of 40°C, a charge (as reference: theoretical electric charge for formation of positive electrode active material) of 250%, and 36 hours.

(Example 2)

A lead storage battery was produced in the same manner as in Example 1, except that instead of the tube in Example 1, a tube in which the acrylic resin A was held on a non-woven fabric sheet made of polyolefins and polyester (polypropylene and polyethylene terephthalate included, average pore diameter of 15 $\mu$m, and basis weight of 70 g/m$^2$) was used.

(Example 3)

A lead storage battery was produced in the same manner as in Example 1, except that in the tube of Example 1, instead of the acrylic resin A, a tube in which an epoxy resin (EN-0270, manufactured by DIC Corporation) was held was used.

(Comparative Example 1)

A lead storage battery was produced in the same manner as in Example 1, except that instead of the tube in Example 1, a tube in which a phenolic resin was held on a glass non-woven fabric (average pore diameter of 8.5 $\mu$m) was used.

(Comparative Example 2)

A lead storage battery was produced in the same manner as in Example 1, except that instead of the tube in Example 1, an active material holding tube in which the acrylic resin A was held on a polyethylene terephthalate non-woven fabric (average pore diameter of 40 $\mu$m) was used.

[Evaluation of discharge characteristics]

For the lead storage batteries in Examples and Comparative Examples, evaluation of the discharge characteristics was performed at 0.2 CA. That is, the fully charged lead storage battery was left in a water tank (temperature of 30°C) for 24 hours, and then was discharged at 0.2 CA to a final voltage of 1.7 V, and the time until discharge was measured. The results are shown in Table 1.

[Evaluation of charge characteristics]

For the lead storage batteries in Examples and Comparative Examples, evaluation of the charge characteristics was performed at 0.1 CA and 0.8 CA. That is, a fully charged lead storage battery was left in a water tank (temperature of 30°C) for 24 hours, and then was discharged at 0.2 CA to a final voltage of 1.7 V, and the discharge capacity at that time (5-hour rate capacity, discharge capacity at 0.2 CA, and rated capacity, unit: Ah) was measured. After stopping the discharge for 1 hour, the battery was charged with a constant current at a current value of 0.1 CA, and the state of charge (SOC, unit: %) when 2.4 V was reached was calculated from the discharge capacity immediately before charging by the following method.

$$\text{State of charge (SOC)} = \text{charge capacity (Ah) when 2.4 V is}$$

$$\text{reached/discharge capacity (Ah) immediately before charge} \times 100$$

After reaching 2.4 V, 120% constant current charging of the discharge capacity immediately before charging was continued to achieve a fully charged state. After full charging, charging was suspended under the same conditions as described above, and the charging characteristics were evaluated with a constant current charging rate of 0.8 CA. The results are shown in Table 1. It is found that the lead storage batteries in Examples are excellent in the charge characteristics as compared with the lead storage batteries in Comparative Examples.

[Table 1]

|  | Discharge time at 0.2 CA(hr) | SOC at charge at 0.1 CA(%) | SOC at charge at 0.8 CA (%) |
|---|---|---|---|
| Example 1 | 8.3 | 93 | 32 |
| Example 2 | 8.1 | 92 | 30 |
| Example 3 | 8 | 91 | 26 |
| Comparative Example 1 | 7 | 90 | 19 |
| Comparative Example 2 | 7.7 | 90 | 21 |

(Example 4)

As a hydrophilization, four polyolefin non-woven sheets treated with sulfuric acid (manufactured by Japan Vilene Co., Ltd., polyethylene and polypropylene included, and average pore diameter of 20 $\mu$m) were placed on one another, and then stitched 300 mm or more in approximately parallel at intervals of 14.5 mm. Cutting was performed in approximately parallel to a stitch at the position of 3 mm outside from a stitching portion to obtain a stitched laminate of the sheet base member. This laminate was cut so that the length in the direction parallel to the stitch was 294 mm, and then the 9 mm$\phi$ mandrel was passed between the second sheet and third sheet of the laminate to form the sheet laminate into a hollow cylindrical shape, and a cylindrical body was obtained. This cylindrical body was impregnated with a 10% by mass solution of an emulsion of the acrylic A resin for 1 minute. Thereafter, drying was performed with a constant temperature oven at 100°C for 1 hour to obtain a tube (cylindrical shape having an inner diameter of 9 mm$\phi$ $\times$ 294 mm) in which the acrylic resin A was held on the base member. The thickness of the tube (base member (non-woven fabric) on which the acrylic resin A was held) was 0.2 mm as measured with a caliper.

(Example 5)

A tube was produced in the same manner as in Example 1, except that in Example 4, instead of the sulfuric acid-treated polyolefin non-woven sheet, a fluorine gas-treated polyolefm non-woven sheet (manufactured by Japan Vilene Co., Ltd., polyethylene and polypropylene included, and average pore diameter of 20 $\mu$m) was used.

(Example 6)

A tube was produced in the same manner as in Example 1, except that in Example 4, instead of the sulfuric acid-treated polyolefm non-woven sheet, a surfactant-treated polyolefin non-woven sheet (manufactured by Japan Vilene Co., Ltd., polyethylene and polypropylene included, and average pore diameter of 30 $\mu$m) was used.

(Example 7)

A tube was produced in the same manner as in Example 4, except that in Example 4, instead of the sulfuric acid-treated polyolefin non-woven sheet, a plasma-treated polyolefin non-woven sheet (manufactured by Japan Vilene Co., Ltd., polyethylene and polypropylene included, and average pore diameter of 20 $\mu$m) was used.

(Examples 8 to 12)

A tube was produced in the same manner as in Example 7, except that the resin emulsion was changed to that shown in Table 2 in Example 7. The resin emulsion used was as follows.

Acrylic resin (hereinafter also referred to as acrylic resin B) emulsion (average particle diameter of 82 nm): HCAF-24C, manufactured by Shin-Nakamura Chemical Co., Ltd.
Epoxy resin emulsion: EN-0270, manufactured by DIC Corporation
Hydrogenated petroleum resin emulsion (average particle diameter of 346 nm): AM-1000-NT, manufactured by Arakawa Chemical Industries, Ltd.
Rosin resin emulsion (average particle diameter of 310 nm): E-900-NT, manufactured by Arakawa Chemical Industries, Ltd.
Terpene resin emulsion (average particle diameter of 346 nm): Tamanol E-300NT, manufactured by Arakawa Chemical Industries, Ltd.

(Example 13)

A tube was produced in the same manner as in Example 1, except that in Example 1, instead of the polyolefin non-woven fabric sheet treated with sulfuric acid, a polyolefin non-woven fabric sheet that was not hydrophilized was used.

(Comparative Example 3)

In Example 4, instead of the polyolefin non-woven sheet treated with sulfuric acid, a polyolefin non-woven sheet that was not hydrophilized was used to obtain a cylindrical body by the same method as in Example 4. A tube according to Comparative Example 3 was produced without impregnating the cylindrical body with the resin emulsion.

<Evaluation of tensile strength>

The effect of the presence or absence of hydrophilization on tensile strength was confirmed. The tensile strength of the tubes according to Examples and Comparative Examples was measured by using an autograph (EZ-FX, manufactured by Shimadzu Corporation). The distance between grips was 20 mm, and the sweep speed was 5 mm/min. The tensile strength is the maximum strength until the sample is cut, and is the strength per unit width of the sample. Table 2 shows the relative values of the tensile strength in Examples 4 to 13 when the tensile strength in Comparative Example 3 is 1.

<Sulfuric acid degradation test>

The effect of the presence or absence of hydrophilization on sulfuric acid degradation (degree of reduction in tensile strength with sulfuric acid) was confirmed. The tubes according to Examples and Comparative Examples were put into sulfuric acid having a specific gravity of 1.330 (20°C). After the addition, the tube was left for 12 hours so that sulfuric acid penetrated into the tube. After the leaving, the tube was put into a constant temperature oven at 70°C and left for 3 weeks. After the leaving for 3 weeks, the tube was sufficiently washed with running water and dried in a dryer at 60°C for 24 hours. For the dried tube, the tensile strength was measured by the same method as in the above method, and the degree of deterioration with sulfuric acid was evaluated. Table 2 shows the relative values of the tensile strength after sulfuric acid degradation in Examples 4 to 13 when the tensile strength after sulfuric acid degradation in Comparative Example 3 is 1.

[Table 2]

| | Physical property | | Evaluation | |
|---|---|---|---|---|
| | Hydrophilization | Resin | Tensile strength (relative value) | Sulfuric acid degradation (relative value) |
| Example 4 | Sulfuric acid | Acrylic resin A | 2.3 | 2.1 |
| Example 5 | Fluorine gas | | 2.3 | 2.3 |
| Example 6 | Surfactant | | 2.0 | 1.7 |
| Example 7 | Plasma | | 2.4 | 2.1 |
| Example 8 | Plasma | Acrylic resin B | 1.8 | 1.8 |
| Example 9 | | Epoxy resin | 2.1 | 2.1 |
| Example 10 | | Hydrogenated petroleum resin | 1.6 | 1.6 |
| Example 11 | | Rosin resin | 1.4 | 1.3 |
| Example 12 | | Terpene resin | 1.5 | 1.4 |
| Example 13 | - | Acrylic resin A | 1.1 | 1.1 |
| Comparative Example 3 | - | - | 1 | 1 |

<Evaluation of compressive strength>

The effect of the presence or absence of hydrophilization on compressive strength was confirmed. The tubes according to Examples 4 to 13 were cut into a length of 50 mm, and the compressive strength in the length direction (axial direction) was measured. In measurement, each of the tube was set on a compression tester comprising a load cell (manufactured by Fuji Controls Co., Ltd.), and an upper pedestal was moved to a lower pedestal where the tube had been set to crush the tube, and the maximum strength when the tube had been crushed was measured with the load cell. Table 3 shows the relative values of the compressive strength in Examples 4 to 12 when the compressive strength in Example 13 is 1.

[Table 3]

| | | Physical property | | Evaluation |
|---|---|---|---|---|
| | | Hydrophilization | Resin | Compressive strength (relative value) |
| | Example 4 | Sulfuric acid | Acrylic resin A | 4.5 |
| | Example 5 | Fluorine gas | | 5.4 |
| | Example 6 | Surfactant | | 3.7 |
| | Example 7 | Plasma | | 4.7 |
| | Example 8 | Plasma | Acrylic resin B | 4.6 |
| | Example 9 | | Epoxy resin | 3.9 |
| | Example 10 | | Hydrogenated petroleum resin | 2.6 |
| | Example 11 | | Rosin resin | 2.3 |
| | Example 12 | | Terpene resin | 2.5 |
| | Example 13 | - | Acrylic resin A | 1 |

**Reference Signs List**

1: Lead storage battery, 10: Positive electrode, 12: Cylindrical electrode, 12a: Active material holding tube, 12b: Cored bar, 12c: Positive electrode material, 14: Cylindrical electrode group, 20: Negative electrode, 30: Separator, and 40: Electrolytic solution.

**Claims**

1.  An active material holding tube comprising:

    a resin base member comprising a polyolefin; and
    a resin held on the resin base member.

2.  The active material holding tube according to claim 1, wherein the resin base member further comprises a polyester.

3.  The active material holding tube according to claim 1 or 2, wherein the resin held on the resin base member is an acrylic resin.

4.  The active material holding tube according to any one of claims 1 to 3, wherein a content of the resin held on the base member is 10 to 50% by mass based on a total amount of the active material holding tube.

5.  The active material holding tube according to any one of claims 1 to 4, wherein the resin base member has a hydrophilized surface.

6.  An electrode comprising:

    the active material holding tube according to any one of claims 1 to 5; and
    a cored bar and an electrode material disposed in the active material holding tube.

7.  A lead storage battery comprising a positive electrode plate comprising the active material holding tube according to any one of claims 1 to 5.

8.  A manufacturing method of an active material holding tube, the method comprising holding a resin on a resin base member comprising a polyolefin.

9.  The manufacturing method according to claim 8, further comprising performing a hydrophilization of the base member before the resin is held.

**10.** The manufacturing method according to claim 9, wherein the hydrophilization is at least one selected from a group consisting of sulfuric acid treatment, fluorine gas treatment, plasma treatment, and surfactant treatment.

Fig.1

## INTERNATIONAL SEARCH REPORT

| International application No. |
| --- |
| PCT/JP2018/024429 |

| A. CLASSIFICATION OF SUBJECT MATTER |
| --- |
| Int.Cl. H01M4/14(2006.01)i, H01M4/76(2006.01)i, H01M10/06(2006.01)i |
| According to International Patent Classification (IPC) or to both national classification and IPC |

| B. FIELDS SEARCHED |
| --- |
| Minimum documentation searched (classification system followed by classification symbols)<br>Int.Cl. H01M4/14, H01M4/76, H01M10/06 |

| Documentation searched other than minimum documentation to the extent that such documents are included in the fields searched |
| --- |
| Published examined utility model applications of Japan      1922–1996<br>Published unexamined utility model applications of Japan      1971–2018<br>Registered utility model specifications of Japan      1996–2018<br>Published registered utility model applications of Japan      1994–2018 |

| Electronic data base consulted during the international search (name of data base and, where practicable, search terms used) |
| --- |
|  |

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 57-95078 A (MATSUSHITA ELECTRIC INDUSTRIAL CO., LTD.) 12 June 1982, page 1, left column, line 20 to right column, line 10, page 2, lower right column, lines 1-9, page 3, upper left column, line 16 to lower left column, line 5 (Family: none) | 1-2, 4, 6-8<br>3, 5, 9-10 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 September 2018 (19.09.2018) | 02 October 2018 (02.10.2018) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2018/024429

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 2010-514133 A (O.R.V. OVATTIFICIO RESINATURA VALPADANA S.P.A.) 30 April 2010, claims 1, 3, 5, 10, paragraphs [0086]-[0089], [0108], fig. 1 & US 2010/0015372 A1, claims 42, 44, 46, 51, paragraphs [0087]-[0092], [0116], fig. 1 & WO 2008/075393 A1 & EP 1961059 A1 & KR 10-2009-0099068 A | 1-4, 6-8<br>3, 5, 9-10 |
| Y | WO 2014/017651 A1 (ASAHI KASEI E-MATERIALS CORP.) 30 January 2014, paragraph [0154] & US 2015/0188108 A1, paragraph [0178] & EP 2879206 A1 & KR 10-2015-0020667 A & CN 104428920 A & TW 201414053 A | 5, 9-10 |
| A | JP 40-27261 B1 (NIHON CHIKUDENCHI SEIZO KK) 30 November 1965, page 1, left column, 3rd line from the bottom to right column, line 1 (Family: none) | 1-10 |
| A | JP 37-26250 Y1 (JAPAN STORAGE BATTERY CO., LTD.) 29 September 1962, claims (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H8203506 B